# EUROPÄISCHE PATENTANMELDUNG

(11) **EP 1 591 157 A1**
(43) Veröffentlichungstag der Anmeldung: **02.11.2005**
(21) Anmeldenummer: 05102749.8
(22) Anmeldetag: 07.04.2005
(51) Int. Cl.: B01D 63/02, B01D 71/02

(54) **Hohlfasermembranmodul**

(30) Priorität: 30.04.2004 DE 102004021729
(71) Anmelder: MANN+HUMMEL GmbH, 71638 Ludwigsburg (DE)
(72) Erfinder: Micke, Michael, 70378, Stuttgart (DE); Urbahn, Arndt, 71642, Ludwigsburg (DE); Sauer, Thorsten, 72293, Glatten (DE); Adam, Jens, 66130, Saarbrücken (DE); Schmidt, Helmut, 66130, Saarbrücken (DE)

(57) **Zusammenfassung**

Die Erfindung betrifft ein Hohlfasermembranmodul (10), welches zur Reinigung eines Fluids bei sehr hohen Temperaturen vorgesehen ist. Das Hohlfasermembranmodul (10) verfügt über ein hochtemperaturbeständiges Gehäuse (11) und eine keramische, in dem Gehäuse (11) fixierte Kartusche (19). In der Kartusche (19) sind hochtemperaturbeständige, keramische Hohlfasern (18) gasdicht eingebracht. Die Hohlfasern (18) werden durch einen Keramikpartikelkörper (24) in der Kartusche (19) fixiert, wobei der poröse Keramikpartikelkörper (24) mit einem Glasüberzug (25), welcher in den Keramikpartikelkörper (24) eindringt und die Keramikpartikel auch im Inneren überzieht, abgedichtet ist. Weiterhin betrifft die Erfindung ein Verfahren zur Herstellung des Hohlfasermembranmoduls

## Beschreibung

### Stand der Technik

Die Erfindung betrifft ein Hohlfasermembranmodul nach Anspruch 1, ein Verfahren zur Herstellung eines hochtemperaturbeständigen Hohlfasermembranmoduls nach Anspruch 6 sowie die Verwendung eines Hohlfasermembranmoduls nach Anspruch 12.

In der WO 03/051495 sind ein Hohlfasermembranmodul und ein Verfahren zur Herstellung eines Hohlfasermembranmoduls offenbart. Dort ist beschrieben, dass keramische Hohlfasern in ein Gehäuse eingebracht werden und mit einer Verödungsmasse stirnseitig verschlossen werden. Auf die Verödungsmasse wird eine Vergussmasse aufgebracht, welche die Hohlfasern in dem Gehäuse fixiert. Auf die Vergussmasse wird eine Dichtungsmasse aufgebracht, welche eine gasdichte Schicht auf der Vergussmasse bildet. Alle Massen werden unter definierten Temperaturen in einem Rotationsgießverfahren in das Gehäuse eingebracht. Durch das Rotieren des Moduls wird eine gleichmäßige Verteilung der jeweiligen Masse erzeugt. Das Rotieren des gesamten Moduls erfordert jedoch eine temperierte Schleuder.

Aufgabe der Erfindung ist es, ein Hohlfasermembranmodul zu schaffen, welches zur Reinigung von Fluiden im Hochtemperaturbereich geeignet, einfach und kostengünstig herstellbar ist. Diese Aufgabe wird durch die Merkmale des Patentanspruches 1, 6 und 12 gelöst.

### Vorteile der Erfindung

Das erfindungsgemäße Hohlfasermembranmodul ist geeignet, Fluide bei hohen Temperaturen und / oder hohen Drücken, insbesondere Drücke größer 20 bar, zu reinigen. Hohe Temperaturen im Sinne dieser Patentanmeldung sind Temperaturen im Bereich von 300 °C bis 800 °C, bei welchen keine polymeren Hohlfasermodule eingesetzt werden können. Zu reinigende Fluide können Flüssigkeiten oder Gase sein, welche z. B. in der Lebensmittel- oder Chemieindustrie gereinigt werden müssen. Das Hohlfasermembranmodul weist ein Gehäuse auf, welches aus einem hochtemperaturbeständigen Material besteht. Dieses Material ist z. B. Edelstahl oder Keramik und kann Temperaturen von 800 °C im Dauerbetrieb aushalten. Entsprechend der Anwendungstemperatur kann das Gehäuse rein aus Metall, einer Metalllegierung oder aus Keramik hergestellt sein. Bei einer mehrteiligen Ausführung kann das Gehäuse auch aus einer Materialkombination von z. B. Metall und Keramik bestehen. Das Gehäuse verfügt über einen Fluidzulauf, durch welchen das zu reinigende Fluid in das Gehäuse eindringen, und einen Fluidauslass, durch welchen das Fluid aus dem Gehäuse austreten kann. Weiterhin ist an dem Gehäuse ein Permeatauslass angeordnet, durch welchen das aus dem Fluid abgeschiedene Permeat aus dem Gehäuse austreten kann. Das aus dem Fluidauslass austretende Fluid ist aufkonzentriert, da das abgeschiedene Permeat durch den Permeatauslass aus dem Gehäuse austritt. In dem Gehäuse ist eine Kartusche mit Hohlfasern angeordnet, wobei die Hohlfasern aus einem anorganischen, hochtemperaturbeständigen Material bestehen und Temperaturen von 800 °C im Dauerbetrieb aushalten. Bei besonderen Ausgestaltungen kann das Gehäuse derart ausgestaltet sein, dass die Hohlfasern direkt in das Gehäuse eingebracht werden können und somit das Gehäuse selbst die Kartusche bildet. Die Hohlfasern sind nach einem bekannten Verfahren hergestellt und geeignet, Fluide zu reinigen bzw. Gase zu trennen. Entsprechend der Filtrationsaufgabe sind die Strukturen der Hohlfasern ausgestaltet bzw. deren Porengröße eingestellt. Die Hohlfasern sind dichtend mit der Kartusche verbunden, wobei die dichtende Verbindung zwischen den Hohlfasern und der Kartusche durch mit einem Glasüberzug versehene Keramikpartikel gebildet ist. Diese Verbindung ist hochtemperaturbeständig und kann Temperaturen von 800 °C im Dauerbetrieb aushalten. Die Keramikpartikel berühren einander nur an einzelnen Punkten bzw. kleinen Flächen, wodurch zwischen den Keramikpartikeln Hohlräume gebildet werden. Die einzelnen Keramikpartikel kontaktieren mehrere, insbesondere 8, benachbarte Keramikpartikel. Durch die Keramikpartikel mit den dazwischen liegenden Hohlräumen wird ein poröser Keramikpartikelkörper gebildet. In die Hohlräume zwischen den Keramikpartikel dringt der Glasüberzug ein und verschließt die Hohlräume, wodurch eine gasdichte Verbindung entsteht. Der Glasüberzug dringt auch in das Innere des Keramikpartikelkörpers ein, wodurch auch die tiefer liegenden bzw. innen liegenden Keramikpartikel von dem Glasüberzug umschlossen bzw. deren Hohlräume ausgefüllt sind. Weiterhin dringt der Glasüberzug auch in Hohlräume zwischen den Keramikpartikeln und der Kartusche bzw. den Hohlfasern ein, wodurch ein gasdichter Verbund zwischen den Hohlfasern, dem porösen Keramikpartikelkörper und der Kartusche gebildet ist. Die Kartusche ist aus einem Material gefertigt, welches über ähnliche Eigenschaften, insbesondere ähnliche Wärmeausdehnungskoeffizienten, wie der Keramikpartikelkörper verfügt.

Die ähnlichen Eigenschaften sind vorzugsweise in dem Kontaktbereich des Keramikpartikelkörpers zu der Kartusche erforderlich. Die nicht von dem Keramikpartikelkörper kontaktierten Bereiche der Kartusche können auch andere Eigenschaften aufweisen, ohne dass die Funktion des Hohlfasermembranmoduls beeinträchtigt wird. Die Kartusche ist dichtend in das Gehäuse eingebracht, wobei die Dichtung in Grenzen elastisch ist und Toleranzen ausgleichen kann. Das erfindungsgemäße Hohlfasermembranmodul ist einfach herstellbar und somit preiswerter in der Herstellung. Weiterhin ist eine zuverlässige Abdichtung der Hohlfasern auch bei hohen Drücken vorhanden.

Es ist vorteilhaft, wenn die Keramikpartikel zueinander in einem definierten Abstand angeordnet sind. Dadurch sind die durch den Glasüberzug auszufüllenden Poren ähnlich groß und der Glasüberzug dringt gleichmäßig in den porösen Keramikpartikelkörper ein. Durch diese Ausgestaltung ist sichergestellt, dass die gasdichte Verbindung über eine gleichmäßige Dicke erzeugt werden kann.

Gemäß einer weiteren Ausgestaltung der Erfindung umhüllt der Glasüberzug die Keramikpartikel, wodurch die Keramikpartikel durch den Glasüberzug aneinander fixiert werden. Dadurch wird eine Gasdichtigkeit auch bei sehr hohen Drücken, z. B. größer 30 bar, insbesondere bis 150 bar erreicht. Weiterhin verfügt die Verbindung über eine hohe mechanische Festigkeit. Das durch den Glasüberzug infiltrierte Volumen des Keramikpartikelkörpers ist gering. Eine Tiefe von 5 bis 10 mm ist für die gasdichte Verbindung ausreichend, wodurch eine maximale Filtrationsfläche erzeugbar ist.

Bei einer weiteren Ausgestaltung füllt der Glasüberzug alle Zwischenräume, welche zwischen den Keramikpartikeln vorhanden sind, aus. Dadurch entsteht ein vollständig gasdichter Körper, welcher über sein gesamtes Volumen gasdicht ist.

Bei dem erfindungsgemäßen Verfahren zur Herstellung eines hochtemperaturbeständigen Hohlfasermembranmoduls werden zuerst die keramischen Hohlfasern in die Kartusche eingebracht. Die keramischen Hohlfasern sind nach einem bekannten Verfahren hergestellt und verfügen über eine Struktur, welche zur Filtration von Fluiden geeignet ist. Die Anzahl der in die Kartusche eingebrachten Hohlfasern ist an den entsprechenden Anwendungsfall angepasst. Nachdem die Hohlfasern in die Kartusche eingebracht wurden, wird die Kartusche an einer Stirnseite verschlossen. Auf die verschlossene Stirnseite der Kartusche wird eine Suspension eingefüllt, wobei die Suspension eine Flüssigkeit und Keramikpartikel, wie z. B. Titanoxid, Siliciumcarbid oder Zirkonoxid, insbesondere Korundpartikel (α-Al₂O₃), enthält. Generell können die Keramikpartikel aus oxidischen oder nichtoxidischen Keramiken bestehen. Vorzugsweise kann die Flüssigkeit Wasser sein, wobei aber auch andere Flüssigkeiten wie z. B. Öle, Säuren, Basen oder Alkohole geeignet sind, die Suspension zu bilden. Die Keramikpartikel verfügen vorzugsweise über eine enge Partikelgrößenverteilung, so dass alle Keramikpartikel eine ähnliche Größe besitzen, wodurch eine homogene Suspension gebildet werden kann. Vorzugesweise besitzen die Keramikpartikel eine mittlere Partikelgröße von 18 bis 25 µm. Zur Vermeidung von Mischphasen ist es vorteilhaft, wenn das keramische Pulver eine Reinheit größer 99 % aufweist. Die Kartusche wird auf die verschlossene Stirnseite gestellt, wodurch die eingefüllte Suspension entsprechend der Gewichtskraft einen Stirnseitenbereich in der Kartusche ausfüllt und die Hohlfasern in ihren Endbereichen umschließt. Die Viskosität der Suspension ist derart einzustellen, dass die Suspension die Holfasern in den Endbereichen überall umfließt und somit die Hohlfasern umschließt. Die Suspension kann z. B. über eine Lanze in die Kartusche eingebracht werden, wobei die Lanze kurz oberhalb der Füllhöhengrenze der Suspension endet. Alternativ zu der Lanze können jedoch auch Zuläufe in der Kartusche vorgesehen sein, durch welche die Suspension in die Kartusche eingebracht werden kann. Anschließend wird die Flüssigkeit aus der Suspension ausgetragen, wodurch zwischen den Keramikpartikeln Hohlräume bzw. Poren gebildet werden. Die Flüssigkeit kann z. B. thermisch aus der Suspension ausgetragen werden. Weiterhin ist es möglich, eine Membran unter der Suspension anzuordnen und die Flüssigkeit durch Unterdruck aus der Suspension herauszusaugen. Die Keramikpartikel ohne die Flüssigkeit bilden einen porösen Keramikpartikelkörper, welcher bei besonderen Ausgestaltungen mit einer geringen Temperatur angesintert werden kann, wodurch ein fester Körper gebildet wird. Weiterhin kann bei vorteilhaften Ausgestaltungen ein Zusatzmaterial, insbesondere ein Zusatzpulver der Suspension beigemengt werden, welches die Bildung eines festen Körpers positiv beeinflusst. Hierzu könnte z. B. δ-Al₂O₃ als Zusatzmaterial verwendet werden. Dieses Material schmilzt bereits bei Temperaturen unter 1000°C und "versintert" den Keramikpartikelkörper, wodurch dieser verfestigt wird und besser weiter verarbeitet werden kann. Auf den Keramikpartikelkörper wird ein Glaspulver aufgebracht. Dies kann z. B. durch Einblasen oder Einschütten erfolgen. Bei anderen Ausgestaltungen der Erfindung kann das Glaspulver in einer Glassuspension enthalten sein, wobei die Glassuspension dann von dem porösen Keramikpartikelkörper aufgesaugt wird und das Glaspulver in den Zwischenräumen des Keramikpartikelkörpers haften bleibt. Das Glaspulver verteilt sich auf der Oberfläche des Keramikpartikelkörpers, so dass eine Glaspulverschicht den Keramikpartikelkörper bedeckt. Das Glaspulver kann aus herkömmlichen Glasmaterialien bestehen, wobei auch Gläser mit hohen Gehalten an z. B. Siliziumoxid (SiO₂), Aluminiumoxid (Al₂O₃), Lathanoxid (La₂O₃) oder Boroxid (B₂O₃) verwendet werden können. Das Glaspulver wird auf eine Temperatur oberhalb seiner Transformationstemperatur, erhitzt, wobei die Transformationstemperatur je nach Glaszusammensetzung im Bereich von z. B. 600°C bis 750°C liegen kann. Bei speziellen Gläsern kann die Transformationstemperatur auch noch höher liegen. Das geschmolzene Glaspulver dringt in die Hohlräume bzw. Poren zwischen den Keramikpartikeln des Keramikpartikelkörpers ein bzw. infiltriert den Keramikpartikelkörper und erstarrt dort nach dem Abkühlen. Das Erhitzen des Glaspulvers kann z. B. in einem Ofen erfolgen, in welchen das Hohlfasermembranmodul derart hineingestellt wird, dass die zu infiltrierende Seite unten und die nicht zu infiltrierende Seite oben angeordnet ist. Der Ofen wird dann auf die erforderliche Temperatur erhitzt bis das Glaspulver schmilzt. Nachdem die erste Seite infiltriert wurde wird das Hohlfasermembranmodul gewendet und die zweite Seite unten angeordnet. Die bereits infiltrierte erste Seite wird, obwohl das Glas in dem Keramikpartikelkörper schmilzt, nicht beschädigt, da die Kapillarkräfte in dem Keramikpartikelkörper das Glas in dem Keramikpartikelkörper halten. Das geschmolzene Glaspulver dringt auch in tiefere Schichten des Keramikpartikelkörpers ein, wodurch der Keramikpartikelkörper über einen infiltrierten Bereich verfügt. Der infiltrierte Bereich kann sich nur über wenige Millimeter, z. B. 3 mm, des Keramikpartikelkörpers erstrecken, oder aber über den gesamten Keramikpartikelkörper, welcher eine Höhe von z. B. 30 mm aufweist. Selbstverständlich kann sich der infiltrierte Bereich auch über jede beliebige Zwischenstufe, wie z. B. über die Hälfte des Keramikpartikelkörpers, erstrecken. Nach dem Erkalten des geschmolzenen Glaspulvers bedeckt ein Glasüberzug die Keramikpartikel. Der Glasüberzug ist für das zu reinigende Fluid undurchlässig, wodurch eine dichtende Verbindung zwischen den Hohlfasern, dem Keramikpartikelkörper und der Kartusche gebildet wird. Die Kartusche wird dichtend in das Gehäuse montiert, wobei die Zu- und Abläufe mit der Kartusche entsprechend korrespondieren. Bei diesem Verfahren können die Hohlfasern auf einfache und kostengünstige Weise in die Kartusche eingebracht und fixiert werden. Der Glasüberzug sollte eine möglichst hohe Korrosionsbeständigkeit aufweisen, damit das zu reinigende Fluid den Glasüberzug nicht zerstören kann.

Bei einem vorteilhaften Verfahren zur Herstellung des Hohlfasermembranmoduls werden die Hohlfasern in ihren Endbereichen mit einem schmalen Band beklebt und anschließend aufgewickelt, wodurch die Hohlfasern zueinander über definierte Abstände verfügen. Die umwickelten Endbereiche ragen z. B. über den Keramikpartikelkörper hinaus und werden abgetrennt, wenn die Hohlfasern ausreichend in dem Keramikpartikelkörper fixiert sind. Das Abtrennen der umwickelten Endbereiche kann vor oder nach dem Infiltrieren des Keramikpartikelkörpers, durch z. B. Absägen, erfolgen. Gemäß einer alternativen Ausgestaltung werden die Hohlfasern in gestanzten Schablonen gehalten und anschließend mit der Suspension umgossen. Die Hohlfasern sind dann, entsprechend der Lochabstände in der Schablone, exakt zueinander positioniert. Hierbei können die Hohlfasern z. B. kreis- oder sternförmig angeordnet sein. Die Abstände der Hohlfasern zueinander können beliebig groß sein, wobei die Abstände im Bereich von z. B. 0,5 mm bis 10 mm, insbesondere 3 mm, vorteilhaft sind. Die Schablone kann mit eingegossen werden oder nach dem Umgießen und Trocknen der Suspension wieder entfernt werden, wodurch die Schablone wieder verwendet werden kann. Auch bei diesem Verfahren können die Hohlfasern in exakt definierten Positionen zueinander angeordnet werden. Das Beabstanden der Hohlfasern zueinander ist sinnvoll, da so jede Hohlfaser optimal von dem Fluid umströmt wird.

Gemäß einer weiteren Ausgestaltung der Erfindung werden die Keramikpartikel deagglomeriert, bevor die Suspension gebildet wird. Das Deagglomerieren der Keramikpartikel kann durch mechanische Verfahren wie z. B. Mahlen, Rühren oder Sieben erfolgen. Eine weitere Alternative, um eine Suspension mit deagglomerierten Partikeln zu erzeugen, ist die Beaufschlagung mit Ultraschall. Durch den Ultraschall können die Agglomerate zerstört werden. Dadurch können sich die Keramikpartikel optimal in der Flüssigkeit verteilen und eine homogene Suspension bilden.

Es ist vorteilhaft, dass die Suspension durch Rühren und Dispergierhilfsmittel, insbesondere Säuren, homogenisiert wird. Es können auch weitere Additive, insbesondere Entschäumer, hinzu gegeben werden. Das Dispergiermittel bewirkt eine Aufladung der Oberfläche der Keramikpartikel, wodurch sich die Keramikpartikel abstoßen und die Agglomerate so zerstören. Eine homogene Suspension ist deshalb vorteilhaft, da dann auch ein homogener, poröser Keramikpartikelkörper ohne Blasen oder Kanäle, gebildet werden kann.

Bei einer weiteren Ausgestaltung der Erfindung wird die Flüssigkeit mit einer porösen, saugfähigen Unterlage, insbesondere aus Gips, aus der Suspension herausgesaugt. Die Unterlage kann das Gehäuse an der Stirnseite verschließen. Weiterhin kann die Unterlage die Hohlfasern an den Stirnseiten derart verschließen bzw. abdichten, dass die Suspension nicht in das Innere der Hohlfasern eindringen kann. Somit bleiben die Hohlfasern in ihren Stirnbereichen offen. Die Geschwindigkeit, mit welcher die Flüssigkeit aus der Suspension herausgesaugt wird, ist entscheidend für die Gefügestruktur des Keramikpartikelkörpers. Falls die Flüssigkeit zu langsam aus der Suspension herausgesaugt wird, verändert sich die Struktur der Keramikpartikel zueinander. Dadurch entstehen unterschiedlich große Poren, wodurch der Glasüberzug nicht gleichmäßig die Keramikpartikel überziehen kann.

Gemäß einer weiteren Ausgestaltung der Erfindung sind an der Stirnseite der Kartusche Kappen angeordnet, mit welchen das Glaspulver an den Stirnseiten erhitzt wird. Die Kappen umschließen die Stirnseiten, wodurch die Stirnseiten lokal erhitzt werden. Hierzu können die Kappen z. B. mit elektrischen Heizspiralen ausgestattet sein. Es sind jedoch auch andere Heizungssysteme denkbar, mit welchen die Kappen beheizt werden können. Durch die Kappen werden nur die erforderlichen Teile des Hohlfasermodules erhitzt, in welchen der Glasüberzug gebildet wird.

Bei einer Weiterbildung der Erfindung verfügen beide Stirnseiten über jeweils eine Kappe, wobei die eine Stirnseite auf eine Temperatur oberhalb der Transformationstemperatur des Glaspulvers und die gegenüberliegende Stirnseite auf eine Temperatur unterhalb der Transformationstemperatur des Glaspulvers erhitzt wird. Durch das Erhitzen beider Stirnseiten wird ein zu großer Temperaturunterschied zwischen den beiden Stirnseiten verhindert. Zu große Temperaturunterschiede würden zu großen thermischen Spannungen in den Hohlfasern, der Kartusche oder dem Keramikpartikelkörper führen, welche die Funktion des Hohlfasermembranmoduls beeinträchtigen können.

Ein oben beschriebenes Hohlfasermembranmodul kann zur Reinigung eines Industrie-Fluids verwendet werden. Industrie-Fluide gemäß dieser Patentanmeldung sind Fluide, wie sie z. B. in der Pharma-, Chemie-, Lebensmittel-, Getränke- oder Druckindustrie verwendet werden. Das gereinigte Fluid kann dann z. B. in die Umwelt abgegeben oder einem Prozess erneut zugeführt werden. Bei der Reinigung eines Industrie-Fluids kann auch eine Gastrennung erfolgen, bei welcher Gasgemische in mindestens ein Reingas und ein Gasgemisch aufgetrennt werden. Die Verwendung der erfindungsgemäßen Hohlfasermembranmodule ist vorteilhaft, da diese extremen Belastungen bzgl. Temperatur und Druck Stand halten. Weiterhin sind die Hohlfasermembranmodule sehr beständig gegen aggressive chemische Medien.

Das Hohlfasermembranmodul kann vorzugsweise zur Reinigung von Flüssigkeiten verwendet werden. Hierbei stellt die Reinigung von Trink- oder Abwasser eine besondere Verwendung dar. Weiterhin kann aber auch Prozesswasser der Reaktor- oder Papierindustrie gereinigt werden. Die gereinigten Flüssigkeiten können dann direkt ins Abwasser eingeleitet oder erneut verwendet werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte, sowie für sich schutzfähige Ausführungen darstellen können, für die hier Schutz beansprucht wird.

### Zeichnung

Weitere Einzelheiten der Erfindung werden nachfolgend in der Zeichnung anhand schematischer Ausführungsbeispiele beschrieben. Hierbei zeigt
- Figur 1: ein Hohlfasermembranmodul im Schnitt,
- Figur 2: ein Ausschnitt aus einem Hohlfasermembranmodul,
- Figur 3: eine Kappe im Schnitt und
- Figur 4: einen Ofen.

### Beschreibung der Ausführungsbeispiele

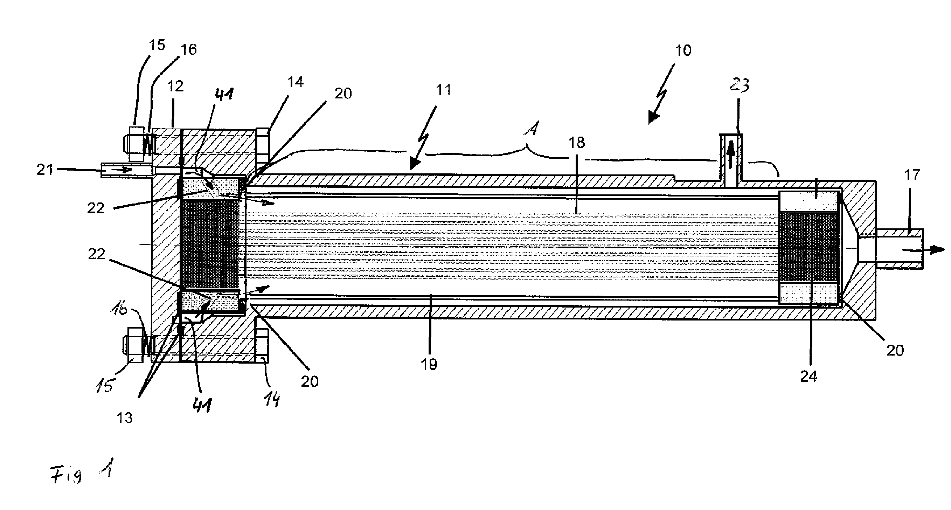

In Figur 1 ist ein hochtemperaturbeständiges Hohlfasermembranmodul 10 im Schnitt dargestellt, welches zur Reinigung eines Fluides, der Gastrennung oder für chemische Umsetzungen, z. B. der Katalyse, vorgesehen ist. Dieses Hohlfasermembranmodul 10 weist ein Gehäuse 11 auf, welches aus einem hochtemperaturbeständigen Material wie Edelstahl besteht. Das Gehäuse 11 ist an einer Stirnseite mit einem Flansch 12 verschlossen, wobei zwischen dem Flansch 12 und dem Gehäuse 11 ein hochtemperaturbeständiger Dichtungsring 13 angeordnet ist, welcher insbesondere aus Graphit oder einem hochtemperaturbeständigen Kunststoff, wie z. B. Klarez, besteht. Alternative Dichtungen können z. B. auch aus hochlegierten Metallen bestehen, welche für Temperaturen von mehr als 400°C beständig sind. Der Flansch 12 ist mit mindestens drei Schrauben 14 mit dem Gehäuse 11 verschraubt. Hierbei sind die Schrauben 14 durch den Flansch 12 hindurch gesteckt und mit Muttern 15 verschraubt, wobei zwischen dem Flansch 12 und den Muttern 15 Spannringe 16 angeordnet sind, welche die Flansche 12 trotz Wärmeausdehnung der Materialien bei der Herstellung und im Betrieb noch verspannen. Die Schrauben 14, Spannringe 16 und Muttern 15 bestehen aus einem hochtemperaturbeständigen Material wie z. B. Edelstahl. An der Endseite des Gehäuses 11 ist ein Permeatauslass 17 angeordnet, wobei zusätzlich auch an dem Flansch 12 ein Permeatauslass 17 vorgesehen sein kann (nicht dargestellt). In dem Gehäuse 11 ist eine Kartusche 19 angeordnet, in welcher Hohlfasern 18 fixiert sind. Die Hohlfasern 18 sind gemäß einem im Stand der Technik bekannten Verfahren hergestellt. Diese Hohlfasern 18 verfügen über eine selektive Wand, welche für das Permeat durchlässig ist. An den dem Permeatauslass zugewandten Endseiten sind die Hohlfasern 18 offen, so dass das Permeat aus dem Inneren der Hohlfasern drucklos austreten kann. Es können auch alle Endseiten der Hohlfasern 18 offen sein, dann ist jedoch für eine entsprechende Abdichtung zu sorgen, so dass kein ungereinigtes Fluid in das Innere der Hohlfasern 18 eintreten kann. Die Kartusche 19 ist als rotationssymmetrisches Bauteil ausgebildet. Sie verfügt über eine einfache Kontur, welche durch spanabhebende oder durch urformende Verfahren hergestellt werden kann, wodurch auch schwer zu bearbeitende Werkstoffe wie z. B. Keramik verwendet werden kann. Das Material der Kartusche 19 muss, wie auch das Material des Gehäuses 11, aus einem hochtemperaturbeständigen Material wie z. B. Keramik oder Edelstahl bestehen. Die Kartusche 19 ist in das Gehäuse 11 eingesetzt, wobei Dichtmittel 20 zwischen dem Gehäuse 11 und der Kartusche 19 angeordnet sind und die Bauteile zueinander abdichten. Die Dichtmittel 20 bestehen aus einem hochtemperaturbeständigen Material wie z. B. Graphit oder Glasloten. In dem Flansch 12 ist ein Einlass 21 bzw. Fluidzulauf angeordnet, welcher über eine Ringleitung 41 mit Durchbrüchen 22 in der Kartusche 19 kommunizierend verbunden ist. In der Kartusche 19 sind mehrere Durchbrüche 22 am Umfang verteilt angeordnet, wodurch eine gleichmäßige Anströmung der Hohlfasern 18 erzeugt wird. Je mehr Durchbrüche 22 in der Kartusche 19 angeordnet sind, desto gleichmäßiger erfolgt die Anströmung der Hohlfasern. Die Kartusche 19 verfügt über einen offenen Bereich A, durch welchen das aufkonzentrierte Fluid durch einen im Gehäuse 11 angeordneten Auslass 23 austreten kann. Der offene Bereich kann z. B. als schlitz- oder kreisförmige Öffnung in der Kartusche 19 ausgestaltet sein. Weiterhin ist es jedoch auch möglich, den offenen Bereich A derart auszugestalten, dass dieser im Vergleich zu den geschlossenen Anteilen extrem groß ist.

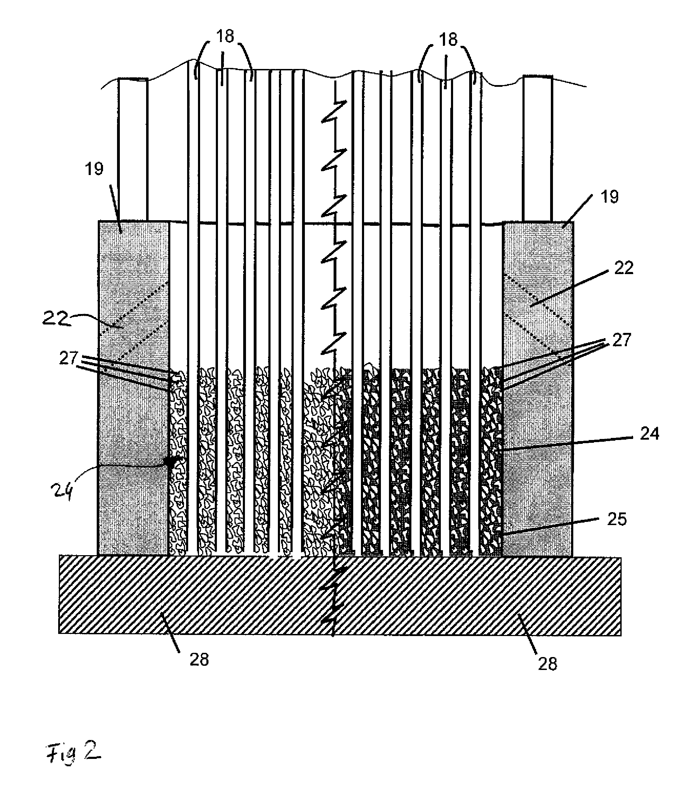

Die Hohlfasern 18 sind in einem Keramikpartikelkörper 24 in der Kartusche 19 fixiert. Der Keramikpartikelkörper 24 umschließt die Hohlfasern 18 in ihren Endbereichen, wobei die Endseiten der Hohlfasern 18 offen sind. Da der Keramikpartikelkörper 24 porös und somit nicht gasdicht ist, ist ein Glasüberzug 25 vorgesehen, welcher die Poren in dem Keramikpartikelkörper 24 ausfüllt und somit abdichtet. Dies wird in Figur 2 näher erläutert.

Das zu reinigende bzw. zu trennende Fluid tritt durch den Einlass 21 in das Hohlfasermembranmodul 10 ein. Durch die Durchbrüche 22 in der Kartusche 19 wird das Fluid gleichmäßig verteilt auf die Hohlfasern 18 geleitet. An dem Einlass 21 ist ein Überdruck angelegt, welcher ausreichend groß ist, dass der Strömungswiderstand der Hohlfaserwand überwunden werden und das Permeat durch die Hohlfaserwand hindurch dringen kann. Das Permeat strömt in dem Innenlumen der Hohlfasern 18 zu dem Permeatauslass 17, wo es in eine angrenzende Leitung (nicht dargestellt) strömt. Das restliche Fluid umströmt die Hohlfasern 18 und tritt durch den Auslass 23 aus dem Gehäuse 11 wieder aus.

In Figur 2 ist ein Fertigungsschritt der Kartusche 19 im Schnitt dargestellt, wobei die linke Bildhälfte einen früheren Fertigungsschritt zeigt als die rechte Bildhälfte. Der Figur 1 entsprechenden Bauteile sind mit gleichen Bezugszeichen versehen.

Auf der linken Bildhälfte ist die Kartusche19 mit den darin angeordneten Hohlfasern 18 dargestellt. Die Hohlfasern 18 sind durch den porösen Keramikpartikelkörper 24 in ihren Endbereichen umschlossen und in der Kartusche 19 fixiert. Der Keramikpartikelkörper 24 besteht aus einzelnen Keramikpartikeln 27, welche aneinander anliegen. Der Abstand der Keramikpartikel 27 zueinander ist abhängig von der Geschwindigkeit, mit welcher die Flüssigkeit aus der Suspension entfernt wird. Die Kartusche 19 steht mit ihrer Stirnseite auf einer Unterlage 28, welche aus einem saugfähigen Material, insbesondere Gips, besteht. Die Unterlage 28 saugt die Flüssigkeit aus der Suspension heraus, wodurch ein gleichmäßiges Gefüge gebildet wird.

Auf der rechten Bildhälfte ist die Kartusche 19 in einem späteren Fertigungsstadium dargestellt. Das auf den Keramikpartikelkörper 24 aufgebrachte Glaspulver ist bei dieser Darstellung bereits aufgeschmolzen und hat den Keramikpartikelkörper 24 infiltriert. Der poröse Keramikpartikelkörper 24 ist durch den Glasüberzug 25 überzogen, wobei die einzelnen Keramikpartikel 27 von dem Glasüberzug 25 umschlossen und die Hohlräume zwischen den Keramikpartikeln 27 durch den Glasüberzug 25 ausgefüllt sind. Durch den Glasüberzug 25 ist ein gasdichter Verbund zwischen der Kartusche 19, dem Keramikpartikelkörper 24 und den Hohlfasern 18 gebildet. Die Unterlage 28 kann von der Stirnseite der Kartusche 19 entfernt werden, wodurch die Hohlfasern 18 an ihren Stirnseiten offen sind.

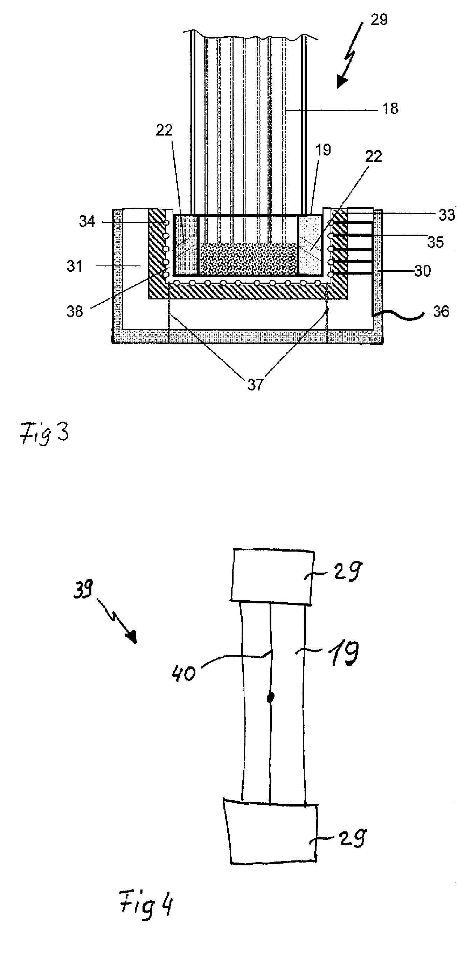

In Figur 3 ist eine Kappe 29 im Schnitt dargestellt, wobei eine Kartusche 19 in der Kappe 29 angeordnet ist. Der Figur 1 oder 2 entsprechenden Bauteile sind mit gleichen Bezugszeichen versehen. Die Kappe 29 wird über den Endbereich der Kartusche 19 gemäß Figur 1 oder 2 gestülpt. Dies erfolgt dann, wenn die Flüssigkeit aus der Suspension herausgesaugt und der poröse Keramikpartikelkörper 24 (gemäß Figur 2) gebildet ist. Die Kappe 29 verfügt über eine Gehäusestruktur 30, in welcher eine Isolation 31 angeordnet ist. Die Gehäusestruktur 30 begrenzt somit die Kappe 29 nach außen, wobei die Gehäusestruktur 30 aus einem hochtemperaturbeständigen Material, insbesondere aus Edelstahl, besteht. Die Isolation 31 besteht aus einem Material bzw. Materialgemisch, welches über gute thermische Isolationseigenschaften verfügt. Hierzu können dem Fachmann wohlbekannte Isoliermaterialen, wie z. B. Schamotte, Mullite, amorphe Aluminiumsilikat- oder Aluminiumoxidfasern, verwendet werden. Innerhalb der Isolation 31 ist eine Heizhülse 33 angeordnet, welche einen Heizdraht 34 enthält. Der Heizdraht 34 ist über Stromzuführungen 35 mit einem Elektroanschluss 36 verbunden. Der Elektroanschluss 36 versorgt den Heizdraht 34 mit Energie, so dass dieser sich und die Heizhülse 33 erhitzen kann. Da für das Schmelzen des Glaspulvers eine definierte Temperatur erforderlich ist, sind Thermoelemente 37 vorgesehen, welche die Temperatur in der Heizhülse 33 überwachen und den Heizdraht 34 entsprechend regeln. Somit kann die Heizhülse 33 auf einer konstanten Temperatur gehalten werden. Innerhalb der Heizhülse 33 ist ein Korundrohr 38 angeordnet, in welches die Kartusche 19 gemäß Figur 1 oder 2 hineingesteckt werden kann. Das Korundrohr 38 dient zur Vermeidung von lokalen Überhitzungen und einer guten Wärmeverteilung innerhalb der Kartusche 19. Lokale Überhitzungen könnten zu hohen thermischen Spannungen und damit verbundenen Rissen in der Kartusche 19 oder dem Gefüge innerhalb der Hohlfasern 18 oder dem Keramikpartikelkörper 24 führen.

In Figur 4 ist ein Ofen 39 mit einer Kartusche 19 gemäß Figur 1 oder 2 schematisch dargestellt. Der Ofen 39 verfügt über zwei Kappen 29, welche über einen Steg 40 verbunden sind. An jeder Stirnseite der Kartusche 19 ist eine Kappe 29 angeordnet, welche die Stirnseite auf die erforderliche Temperatur erhitzt. Die untere Kappe 29, in welcher das Glaspulver (nicht dargestellt) geschmolzen wird, kann auf eine höhere Temperatur, z. B. 1000 °C, erhitzt werden, während die obere Kappe 29 auf eine niedrigere Temperatur, z. B. 800 °C, erhitzt wird. Somit kann in der oberen Kappe 29 eine Temperatur unterhalb der Transformationstemperatur des Glaspulvers eingestellt werden, so dass ein bereits fertig gestellter Glasüberzug (nicht dargestellt) nicht beschädigt wird. Das Erhitzen beider Stirnseiten ist vorteilhaft, damit keine zu großen thermischen Unterschiede in der Kartusche 19 auftreten und es zu keinen Spannungsrissen kommt.

## Patentansprüche

1. Hohlfasermembranmodul (10) zur Reinigung eines Fluids, aufweisend ein Gehäuse (11) und Hohlfasern (18)
- wobei das Gehäuse (11), aus einem hochtemperaturbeständigen Material besteht und über einen Fluidzulauf (21), einen Fluidauslass (23) und einen Permeatauslass (17) verfügt,
- wobei die Hohlfasern (18) aus einem anorganischen, hochtemperaturbeständigen Material bestehen und in einer Kartusche (19) innerhalb des Gehäuses (11) angeordnet sind, und
- wobei die Hohlfasern (18) dichtend mit der Kartusche (19) verbunden sind,
**dadurch gekennzeichnet, dass**
die dichtende Verbindung zwischen den Hohlfasern (18) und der Kartusche (19) durch mit einem Glasüberzug (25) versehene Keramikpartikel (27) gebildet ist, wobei diese Verbindung hochtemperaturbeständig ist.

2. Hohlfasermembranmodul (10) nach Anspruch 1, **dadurch gekennzeichnet, dass** die Keramikpartikel (27) zueinander in einem definierten Abstand angeordnet sind.

3. Hohlfasermembranmodul (10) nach einem der Ansprüche 1 oder 2, **dadurch gekennzeichnet, dass** der Glasüberzug (25) die Keramikpartikel (27) umhüllt.

4. Hohlfasermembranmodul (10) nach einem der vorangehenden Ansprüche, **dadurch gekennzeichnet, dass** der Glasüberzug (25) alle Zwischenräume, welche zwischen den Keramikpartikeln (27) vorhanden sind, ausfüllt.

5. Hohlfasermembranmodul (10) nach einem der vorangehenden Ansprüche, **dadurch gekennzeichnet, dass** die Verbindung zwischen den Hohlfasern (18) und der Kartusche (19) gasdicht ist

6. Verfahren zur Herstellung eines hochtemperaturbeständigen Hohlfasermembranmoduls (10), aufweisend folgende Verfahrensschritte:
- Einbringen des Filtermediums, insbesondere keramische Hohlfasern (18), in die Kartusche (19),
- Kartusche (19) an einer Stirnseite verschließen,
**dadurch gekennzeichnet, dass**
- eine Suspension in die Kartusche (19) eingefüllt wird, wobei die Suspension Keramikpartikel (27) und eine Flüssigkeit, insbesondere Wasser, enthält,
- die Suspension einen Stirnseitenbereich in der Kartusche (19) ausfüllt und die Hohlfasern (18) in ihren Endbereichen umgibt,
- die Flüssigkeit aus der Suspension ausgetragen wird, wodurch zwischen den Keramikpartikeln (27) Poren gebildet werden und ein Keramikpartikelkörper gebildet wird,
- auf den Keramikpartikelkörper ein Glaspulver aufgebracht wird,
- das Glaspulver auf eine Temperatur oberhalb der Transformationstemperatur erhitzt wird, wobei das geschmolzene Glaspulver in die Poren zwischen den Keramikpartikeln (27) eindringt und dort erstarrt, wobei ein Glasüberzug (25) gebildet wird, welcher eine dichtende Verbindung zwischen den Hohlfasern (18) und der Kartusche (19) bildet.

7. Verfahren nach Anspruch 6, **dadurch gekennzeichnet, dass** die Keramikpartikel (27) deagglomeriert werden, bevor die Suspension gebildet wird.

8. Verfahren nach Anspruch 6 oder 7, **dadurch gekennzeichnet, dass** die Suspension durch Rühren und Dispergierhilfsmittel, insbesondere Säuren, homogenisiert wird.

9. Verfahren nach einem der Ansprüche 6 bis 8, **dadurch gekennzeichnet, dass** die Flüssigkeit mit einer porösen, saugfähigen Unterlage (28) aus der Suspension herausgesaugt wird, wobei die Unterlage (28) die Kartusche (19) an der Stirnseite verschließt.

10. Verfahren nach einem der Ansprüche 6 bis 9, **dadurch gekennzeichnet, dass** an der Stirnseite der Kartusche (19) Kappen (29) angeordnet sind, mit welchen das Glaspulver an den Stirnseiten erhitzt wird.

11. Verfahren nach Anspruch 10, **dadurch gekennzeichnet, dass** beide Stirnseiten über jeweils eine Kappe (29) verfügen, wobei die eine Stirnseite auf eine Temperatur oberhalb der Transformationstemperatur des Glaspulvers und die gegenüberliegende Stirnseite auf eine Temperatur unterhalb der Transformationstemperatur des Glaspulvers erhitzt wird.

12. Verwendung eines Hohlfasermembranmoduls nach einem der Ansprüche 1 bis 5 bzw. ein, gemäß einem Verfahren der Ansprüche 6 bis 11, hergestelltes Hohlfasermembranmoduls zur Reinigung eines Fluids, **dadurch gekennzeichnet, dass** das Fluid ein Industrie-Fluid ist.

13. Verwendung des Hohlfasermembranmoduls nach Anspruch 12, **dadurch gekennzeichnet, dass** das Fluid eine Flüssigkeit ist.
